# EUROPEAN PATENT APPLICATION

(11) **EP 1 241 088 A1**
(43) Date of publication of application: **18.09.2002**
(21) Application number: 01830146.5
(22) Date of filing: 01.03.2001
(51) Int. Cl.: B62M 7/12

(54) **Direct current driving wheel for two or three-wheeler vehicles**

(71) Applicant: Trebbi Fiorenzo (Company), 40011 Anzola dell'Emilia (Bologna) (IT)
(72) Inventor: Trebbi, Fiorenzo, 40100 Bologna (IT)
(74) Representative: Sassatelli, Franco T., Dr.

(57) **Abstract**

The driving wheel is to put in motion by the ignition drive to be equipped with a switch (1) which sends the starting drive on line (6) to a rotor (7) which rotates into the fixed rotor (8) and it is mounted on the shaft (10) with gears (11), gives the moving to the gear (12) that rotates on the crown (13) connected to the fixed rotor (8). All parts to be contained into the planetar gear (14) which on its exit brings to a reduction of the revolutions, determined by the three drives in sequence, in comparison with the starting revolutions of the rotor (7). The planetary gear (14) is provided to have connected a magnetic clutch (15) that permits to connect or to disconnect the motion to be transmitted to the wheel hub and consequently to give motion to the front wheel (16) in the two line of march. The activation of the magnetic clutch (15) brings the same in contact with the hub (17) transmitting the movement to the wheel (16).

## Description

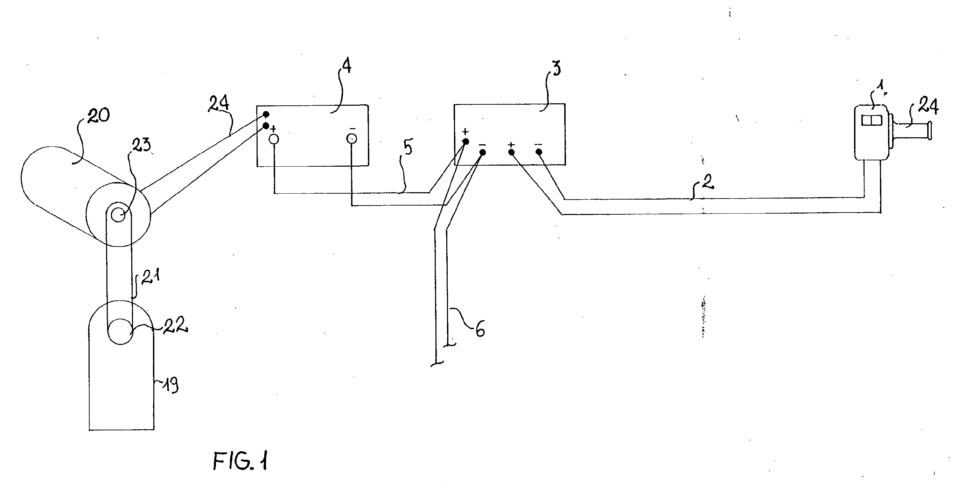

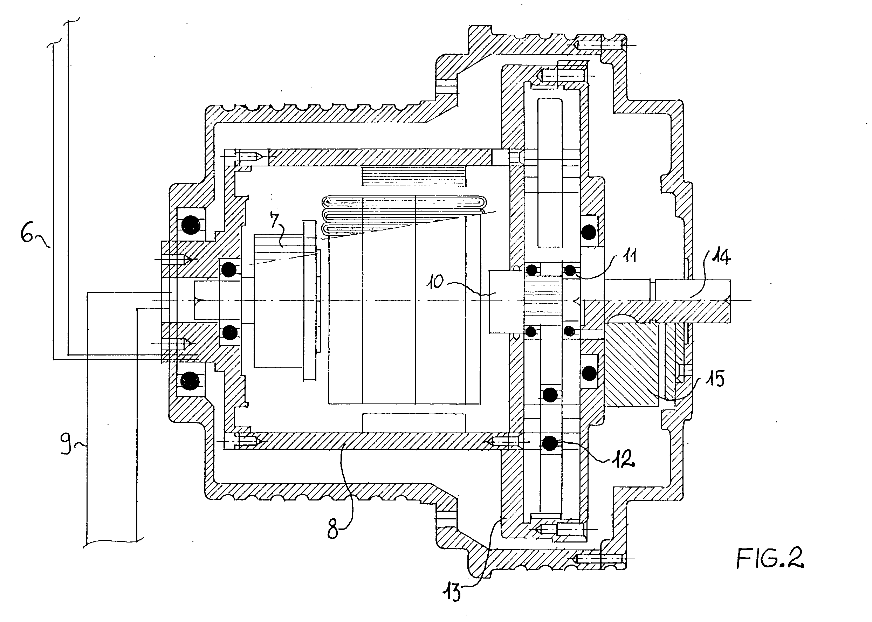

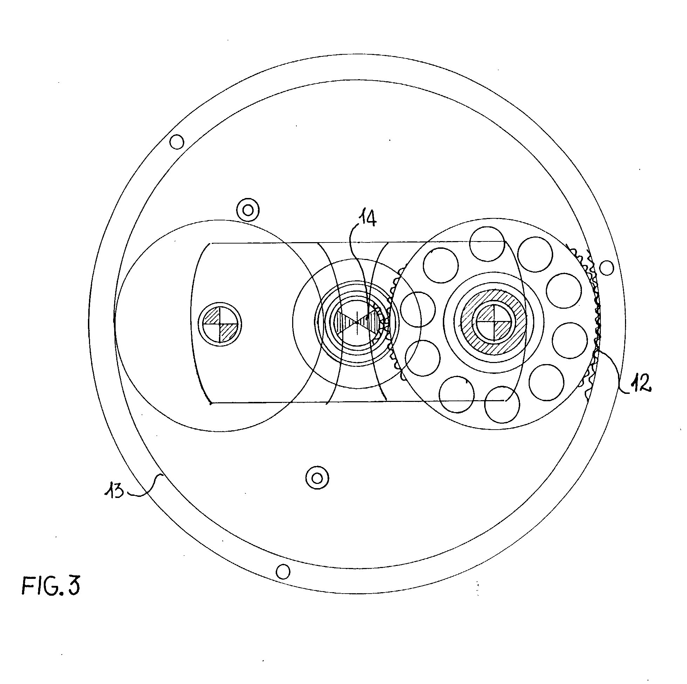

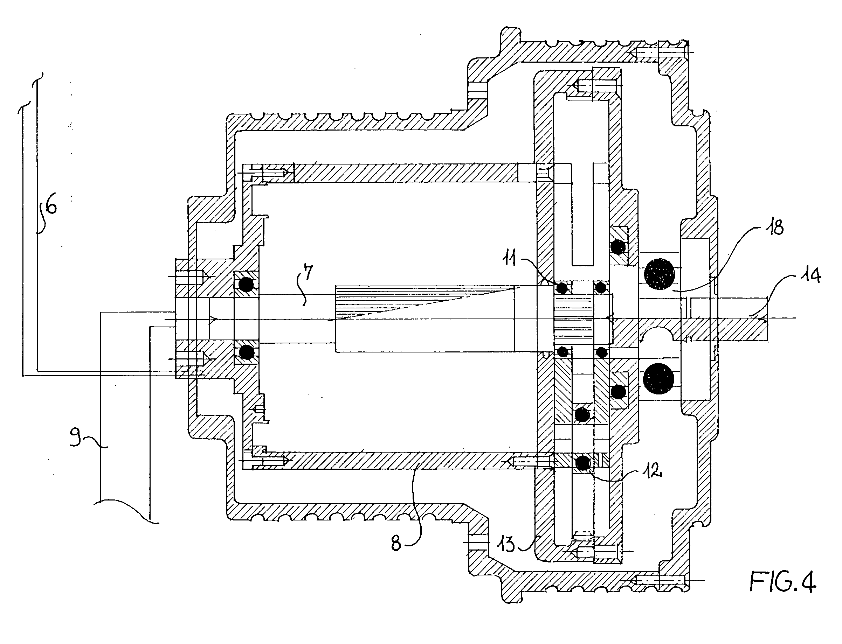

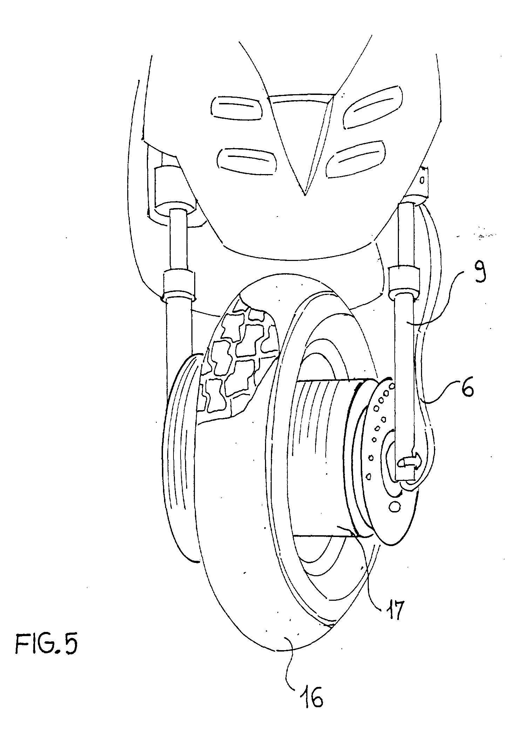

The invention refers to a direct current driving wheel to be mounted on a two or three wheeler vehicle that first of all realized a vehicle according to the laws in force for the environmental defence. In this way it is permitted the use of said vehicle also into the forbidden areas to the internal-combustion engine vehicles or in those day hours or days in which, to reduce the air pollution, it is forbidden to the internal-combustion engine the movement. Said driving wheel, to be particularly used on motor-bicycles and motor-scooters and also on three-wheelers, to be mounted during the fabrication on the same vehicles or to be considered like an accessory to be mounted subsequently on the vehicle already in traffic. In both cases the invented device to be put on the front wheel and it maintains unchanged the operation of the internal-combustion engine. Currently the two or three wheeler vehicles have a movement to be given by a internal combustion engine or by an electric motor. The internal combustion engine has the big problem to produce air pollution and for this reason sometimes it is substituted by the electric motor. Said electric motor has however two foundament problems that have limited considerably its use till today: it does not guarantee a sufficent endurance, infact often it raises the problem to not arrive to destination and then there is the subsequent problem to must proceed with the battery recharge so had to stop the vehicle in parking. Said problems have determined the fact that the electric vehicle has today a very limited use such the exclusive use inside the town where the journeys to be made, from who uses said vehicle, are very short and repetitive. The invented device permits to equip a two or three wheeler vehicle contemporary with a motion system to be activated by a internal combustion engine to be coupled with an electric motor so permitting, with a simple change of feeder, to altervatively move having a feeder with fuel or electric. This permits a lot of advantages such us: a) it iscreated a very ecological vehicle to be used also when anti-pollution prohibitions are present; b) it determines a big energetic saving such us the energy generated during the internal combustion engine moving is stored up into a battery to be then used for the electric moving; c) it is characterized to a big reliability such as are to be alternatively used two kind of feeder: electric and fuel. Currently in the two or three wheeler vehicles is provided a motor group that, by a chain or return bearing, is connected to the rear wheel so transmitting to the same the moving. The invented device being in coupling with the motor group provides the invented driving wheel to be placed onto the front wheel, so coming to change the current hub which brings only the braking group, so to form the front support wheel. The driving wheel moun ted on the front wheel is to put in motion by the ignition drive to be equipped with a switch 1 which on line 2 sends the start to the control board 3 to be fed from the battery 4 on line 5. The starting drive comes on line 6 to a rotor 7 which rotates into the fixed rotor 8 to be mounted on the bracket 9. The rotor 7, mounted on the shaft 10 with gears 11, gives the moving to the gear 12 that rotates on the crown 13 connected to the fixed rotor 8. The above cited components to be contained into the planetar gear 14 which on its exit brings to a reduction of the revolutions, determined by the three drives in sequence, in comparison with the starting revolutions of the rotor 7. The planetary gear 14, actuating the reduction of the revolutions, is provided to have connected a magnetic clutch 15 that permits to connect or to disconnect the motion to be trasmitted to the wheel hub and consequently to give motion to the front wheel 16 in the two line of march by means of the backwards and forwards drive given acting on the twist-grip with the switch 1 in the position of starting of the electric motor and consequently with the internal combustion engine stalled. The activation of the magnetic clutch 15 brings the same in contact with the hub 17 transmitting the movement to the wheel 16. In the version for scooters, in which the revers motion drive is not necessary, it is provided instead of the clutch 15 an idler gear 18 that permits the movement only forward. During the movement by means of the internal combustion engine 19, the alternator 10 connected to the internal combustion engine by a belt 21 on plugs 22 and 23 determines on line 24 the recharge of the battery 4 which will be used to feed the electric motor. During the two or three wheeler vehicle use fed alternatively with fuel or with electric energy to pass from the internal combustion engine use to the electric one, the drive of the internal combustion engine 19 is stalled, so stalling the same vehicle. Then the switch 1 is turned on and ruotating the twist-grip 24 is put in working a potentiometer that put in movement the vehicle with electric feeder. The invented device in the embodiments for two or three wheelers is illustrated in the drawings of sheets 1, 2, 3, 4 and 5. In sheet 1 fig. 1 is schematic view of the electric circuit to be opened by the switch 1 and showing the recharge system of the battery 4 when the internal combustion engine 19 is started. In sheet 2 fig. 2 is section view of the driving wheel to be used on the three wheeler with the clutch 15. In sheet 3 fig. 3 is plant view of the planetary gear 14 for the revolutions reduction. In sheet 4 fig. 4 is section view of the same driving wheel to be used onto the two wheelers vehicles using the idler gear 18. In sheet 5 fig. 5 is illustrative view of a front wheel 16 of a scooter in the hub 17 of which the invented wheel is mounted.

## Claims

1. Direct current driving wheel for two or three-wheeler vehicles to put in motion by the ignition. drive to be equipped with a switch (1); **characterized in that:**
- on line (2) the start is sent to the control board (3), to be fed from the battery (4) on line (5), that transmits said start on line (6) to a rotor (7), rotating into the fixed rotor (8) to be mounted on the bracket (9), which is mounted on the shaft (10) with gears (11) and giving the moving to the gear (12) that rotates on the crown (13) connected to the fixed rotor (8), all parts to be contained into the planetar gear (14) which on its exit brings to a reduction of the revolutions, determined by the three drives in sequence, in comparison with the starting revolutions of the rotor (7); and that
- said planetary gear (14), actuating the reduction of the revolutions, is provided to have connected a magnetic clutch (15) that permits to connect or to disconnect the motion to be trasmitted to the wheel hub and consequently to give motion to the front wheel (16) in the two line of march by means of the backwards and forwards drive given acting on the twist-grip with the switch (1) in the position of starting of the electric motor and consequently with the internal combustion engine stalled, the activation of the magnetic clutch (15) brings the same in contact with the hub (17) transmitting the movement to the wheel (16).

2. Direct current driving wheel for two or three-wheeler vehicles, as per claim 1, **characterized in that** in the version for scooters, in which the revers motion drive is not necessary, it is provided instead of the clutch (15) an idler gear (18) that permits the movement only forward.

3. Direct current driving wheel for two or three-wheeler vehicles, as per claim 1, **characterized in that** during the movement by means of the internal combustion engine (19), the alternator (10) connected to the internal combustion enginy by abelt (21) on plugs (22 and 23) determines on line (24) the recharge of the battery (4) which will be used to feed the elctric motor.

4. Direct current driving wheel for two or three-wheeler vehicles, as per claim 1, **characterized in that** during two or three wheeler vehicle use fed alternatively with fuel or with electric energy to pass from the internal combustion engine use to the electric one, the drive of the internal combustion engine (19) is stalled, so stalling the same vehicle; the, the switch (1) is turned on and ruotating the twist-grip (24) is put in working a potentiometer that put in movement the vehicle with electric feeder.
